# EUROPEAN PATENT SPECIFICATION

(11) **EP 0 727 908 B1**
(45) Date of publication and mention of the grant of the patent: **21.10.1998**
(21) Application number: 96300632.5
(22) Date of filing: 30.01.1996
(51) Int. Cl.: H04N 7/173

(54) **Video mail delivery system**
Videopostsystem
Système vidéo postal

(30) Priority: 31.01.1995 US 380997
(43) Date of publication of application: 21.08.1996
(73) Proprietor: Krebs, Mark Sinclair, Toronto, Ontario M4K 1J2 (CA)
(72) Inventor: Krebs, Mark Sinclair, Toronto, Ontario M4K 1J2 (CA)
(74) Representative: Robson, Aidan John

(56) References cited:
- EP-A- 0 513 763
- EP-A- 0 617 563
- EP-A- 0 633 694
- WO-A-91/03112

## Description

### FIELD OF INVENTION

The invention relates to telephone, wireless, satellite and CATV communication systems and networks. In particular the invention relates to the delivery of video content.

### BACKGROUND OF THE INVENTION

The current methods of delivering video data over existing television, telephone and computer networks require either fixed transmission methods or possible lower transmission quality.

The transmission of images and full motion video data over television networks has evolved from (i) broadcast television transmitting fixed schedules of programming, (ii) to multiple channel cable television, available to local CATV subscribers, (iii) to pay-per-view programming, where subscribers place an order with the cable operator for the subscriber's descrambling of a scheduled program to permit subscriber viewing at a designated time.

Due to the emergence of more sophisticated, standardized digital compression techniques like Motion Pictures Experts Group (MPEG), and switched, scalable protocols like Asynchronous Transport Mode (ATM), more video data in a compressed, switchable form can be transmitted along virtual channels through the existing telephone line, cable or satellite transponder communications infrastructure. Video signals typically take up about 140 Mb/s of bandwidth. Initial source encoding and compression can reduce this to 45 Mb/s. MPEG compression techniques can now reduce these signals to 1.5 Mb/s for VCR video to 12 Mb/s for realtime, sports network quality. Most CATV systems deliver 450 MHz or 550 MHz to the household at 6 MHz per television channel, with rebuilds delivering 750 MHz. The upper 5-45 MHz can be used for emerging digital delivery, where a 1.2 Mb/s video signal compression can transform a single 6 MHz channel into supporting 12-14 VCR quality channels. The penetration rate of these reception capabilities, however, will take several years to implement, and until that time, other intermediate, interactive video reception strategies like the following patent examples, have been proposed.

Literal et al. U.S. Pat. No. 5,247,347 describes a PSTN architecture for video-on-demand systems, as well as subscriber control of video programming delivery. Accordingly, subscribers are provided with an interface unit including a local loop node for receiving a multiplexed signal from a subscriber local loop. The Central Office interface to the subscriber can receive video signals from a video information provider, and telephone voice and data from the subscriber, the latter allow the subscriber to digitally interact with a Video Information Provider (VIP) system, to enable it to receive buffered digital video signals from a remote Central Office video database through a Digital Cross-Connect (DCS) provided by the PSTN. This digital interaction provides for the selection of a wide variety of selected compressed video/audio data programs, including feature films, music videos, medical and commercial imaging, video phone, video conferencing and video games. Various combinations of voice and data interaction of the subscriber with the VIP are possible, but in all cases video control data is provided over the subscriber loop, which may be coaxial cable, optical fibre or telephone lines from the subscriber's premises to the video buffer in the VIP system, which controls the receipt of video signals.

The subscriber's local loop for the receipt of the compressed video signal must support a 1.5 MB/s digital transmission, or be comprised of a D1 channel (normally a 24 telephone line bundle) overlaid with the standard telephone service signalling.

An alternative to centralized television or cable video distribution systems are video telephony systems, where multiple system users generate their own video transmissions. These PSTN systems are often bandwidth limited, providing only still frame or limited motion video conferencing capabilities, though recently, digital telephone access lines, such as ISDN, can provide scalable better quality. Digital access facilities to consumer homes, however, are not readily available because they require expensive bandwidth commitments through multiple lines or fibre optic links to the nearest telephone company ISDN switch.

In Papanicolaou et al. U.S. Pat. No. 5,278,889, a video telephony system is proposed using cable-television-telephony and a special method of video telephony dialing to overcome some issues of household video telephone cost. Digital bandwidth access limitations for full motion video to the household are viewed as a significant limitation, and these will not be overcome until all homes are provided with fibre access. Hence, a system involving a coaxial cable network, preferably part of an existing cable television system, is proposed to provide a local access link for the transmission of video telephone signals between each originating and destination location and a respective "head end" located on the cable company premises. Each of the head ends is connected to a Point of Presence (POP) of a telephone common carrier, such as AT&T, so that a connection between pairs of head ends, and thus between a pair of video telephone locations, can be made via a switched network maintained by the carrier.

Hence, the cable subscriber can "borrow" part of the RF cable bandwidth not used for entertainment channels and use it for video telephony. A demodulated audio and video signal from a consumer-type camera or camcorder at the subscriber's home is converted to a compressed digital signal, multiplexed with other digital signals on the trunk line and sent to carrier's local POP as a 384 Kb/s composite signal using an ISDN Primary Rate Interface (PRI) connection. Thus, a video telephone number, which could be the same as the subscriber's standard 10-digit telephone number that uses a video capable extension, provides the subscriber with a video telephony dial-up connection through the network.

In the Papanicolaou et al. system, calls are always initiated and completed by the subscriber, with a Network Control Point (NCP) database containing coaxial cable connection path information along with the ISDN bandwidth subscription of the subscriber to provide an automatic telephone call link to a subscriber with similar carrier/cable head end or straight ISDN connectivity to another local exchange. Transmission rate information in the NCP database is also used for rate revision as a video call is being made, if it is discovered that destination subscriber's equipment can only support a lower rate. Hence, the caller's local POP is instructed by the system to re-initiate the call at the lower rate.

As mentioned before, bandwidth capabilities and the network infrastructure required to support the bandwidth necessary for digital video communication can define the quality of the video image. The 384 Kb/s composite signal rate described in the Papanicolaou et al. system is not television quality and not video quality, which at present, given the best MPEG2 compression capabilities, still requires at least 1.5 Mb/s of bandwidth.

In Baji et al. U.S. Pat. No. 5,027,400, a bidirectional, interactive multimedia system is discussed as a combination of cable and a broadband ATM network, the purpose of which is to deliver television commercials requested by subscribers over a cable television network. The desired program and advertisement are delivered to the subscriber via an ATM exchange, and a subscriber video buffering and mixing system encodes the retrieved video or still image information into the cable television channel feed of the subscriber's choice. The system is essentially an on-demand video/image clip database management system, using cable channels for direct to household transmission.

Existing video-on-demand systems are notionally an approximation of a per transmission based delivery system, but their transmission capabilities are defined by the notion of one sender and multiple subscribers retrieving video information from a central office video database. The network controls do not require the degree of traffic scheduling and bandwidth control per transmission that would be necessary for varying numbers of senders and receivers at varying locations, sending varying durations of video data.

Normally, corporate clients lease permanent transmission bandwidth from a PSTN or private network, which is defined by leased bandwidth access. The scale of this access is defined by total corporate needs and is not expressed on a per transmission basis. It requires either a dedicated broadband, point-to-point channel to each destination, or a broadband access line connection to the nearest PSTN POP that handles Switched Multimegabit Digital Services (SMDS). Needless to say, the leasing charge for such dedicated channels or broadband access is beyond what any individual consumer could afford. However, the maintenance of this access allows corporate clients to transmit bulk data at their discretion.

A consumer-scoped video messaging system today could assume the form of a video telephony system as discussed in the prior art. However, the continual maintenance traffic and bandwidth capabilities related to the requirements of on-demand, bidirectional user control, presupposes constant parameters that imply bandwidth and broadcast restrictions. Bandwidth is a subscription bandwidth, and uniform throughout the network at set subscriber rates. The subscriber cannot invoke bandwidth that is greater for some transmissions and less for others. This would present an unmanageable traffic problem. Broadcast routing, in the form of conferencing call bridging, must be limited to a few participants. This is due to the node architecture and bandwidth uniformity for all transmissions along the transmission paths of the video telephony network.

Discussions of video mail systems in conference literature on computer networks refer to as a feature of the message-based, common channel signaling protocol of multimedia desktop computer workstations. Networked parties can communicate in several ways using network-informing, call messaging type formats, video mail being one of several realtime messaging types. Video mail is also understood as a special video clip message subset of electronic mail or e-mail. It is described as possessing a new protocol structure, like MIT's Multipurpose Internet Mail Extensions (MIME) protocol, which allows computer workstation users to address and transmit video clips as a supplement to the Internet standard Simple Mail Transfer Protocol (SMTP) for e-mail. Multimedia "mailboxes" are similar to e-mail mailboxes. They allow computer workstation users to transmit and retain video mail messages to each other, by providing a multimedia computer directory structure. They can also be used to send video mail messages from a user to a process or a process to a process, to produce a combined end result, like an animated computer graphic composite on realtime video. However, computer networks are essentially fixed transmission systems, involving fixed topologies, predetermined messaging controls and uniform bandwidth, based on a required upper limit traffic handling capability.

The object of the invention is to solve one or more of the drawbacks in existing systems discussed above, or to provide other improvements to the art.

### SUMMARY OF THE INVENTION

This invention relates primarily to the field of telephone and computer networks. The invention provides a method as claimed in claim 1.

Each video transmission request is scheduled for transmission by a managing network provider, and the video transmission itself can be manipulated during transmission by all involved telephone and/or computer networks, in a way analogous to the post office handling all aspects of letter delivery after a letter is deposited in a mailbox. This imparts a full range of transport capabilities on a per transmission basis to the managing network provider who may combine, for different sections of the transmission path, a variety of agent networks, local and interurban interexchanges, along with fibre optic and coaxial, satellite, analog RF and digital wireless communications infrastructure. The managing network provider can also transport the message through a variety of digital protocol formats, compress and decompress the message at certain points on the transmission path, and interchangeably convert between analog and digital formats, depending on the switch, transmitter and line hardware of the telecommunication path, to realize the most efficient transmission path for the video mail message.

This method of network provider control implies a bandwidth traffic and cost economy to both the network provider and the sender-subscriber, because it eliminates the need for the sender-subscriber to permanently engage a network provider for a dedicated send point to receiver point broadband channel to any or several video mail receivers. Transmission time itself, is determined by the managing network provider. The network provider can therefore schedule a transmission time period that optimizes channel traffic and available bandwidth. Hence, a constant subscriber access parameter never limits network capability. The same message may be sent to several destinations or the same destination using different routes, protocols and bandwidth controls along each sender-receiver transmission path.

This approach also allows the managing network provider to avoid the high cost of storing a whole video message, and to provide notification of guaranteed transmission/delivery and picture quality once the network route has been set and all receivers have been informed of the transmission time. The managing network provider could also use a system of intelligent network congestion controlling video mailboxes, each having some information storage capability and a routing switch or microprocessor, to maintain and deploy such information as the time, duration, destination (either end receivers or multimedia merging processes), bandwidth allocation, protocol format, virtual routing scenario, setup controls, and network requirement information on a number of video mail transmissions.

A video mail delivery system, characterized in this manner, could become a motivating application for the extension of urban and interurban broadband communications infrastructure, because of its potential commercial and consumer market appeal.

Also, for example, the current regulation of US Federal Communications Commission states that in order for PSTNs to offer authorized video dialtone services, they must offer common carriage gateways to other video transmission providers who may wish to take advantage of the PSTN's switching and interexchange capability. The video mail delivery system here described could be a suitable service offering by PSTNs that complies with the current regulatory structure, in which case a PSTN network may pick up video mail transmissions from individual senders, multiplex them into a broadband interexchange channel and allow cable networks at the receiver end to act as agents of local distribution.

### BRIEF DESCRIPTION OF THE DRAWINGS

For a better understanding of the present invention and to show more clearly how it may be carried into effect, reference will now be made, by way of example, to the accompanying drawings which show the preferred embodiment of the present invention and in which:
Figure 1 is a general diagram showing telecommunication components of a video mail delivery system; and
Figure 2 is an example of two different transmissions through a network for the system of Figure 1; and
Figure 3 is an example of two simultaneous transmissions through a network with preemptive traffic control for the system of Figure 1; and
Figure 4 and Figure 5 are flow charts indicating sender/managing network provider interaction steps allowing for preemptive transmission traffic control in the system of Figure 1; and
Figure 6 is an illustration of data communication connections to a video mailbox system of control node operators and other video mailboxes; and
Figure 7 is an illustration of a sample transmission path database maintained in the video mailbox system of Figure 6; and
Figure 8 is a detailed illustration of a portion of the database of Figure 7 showing virtual paths controls per receiver path.

### DETAILED DESCRIPTION OF THE PREFERRED EMBODIMENT

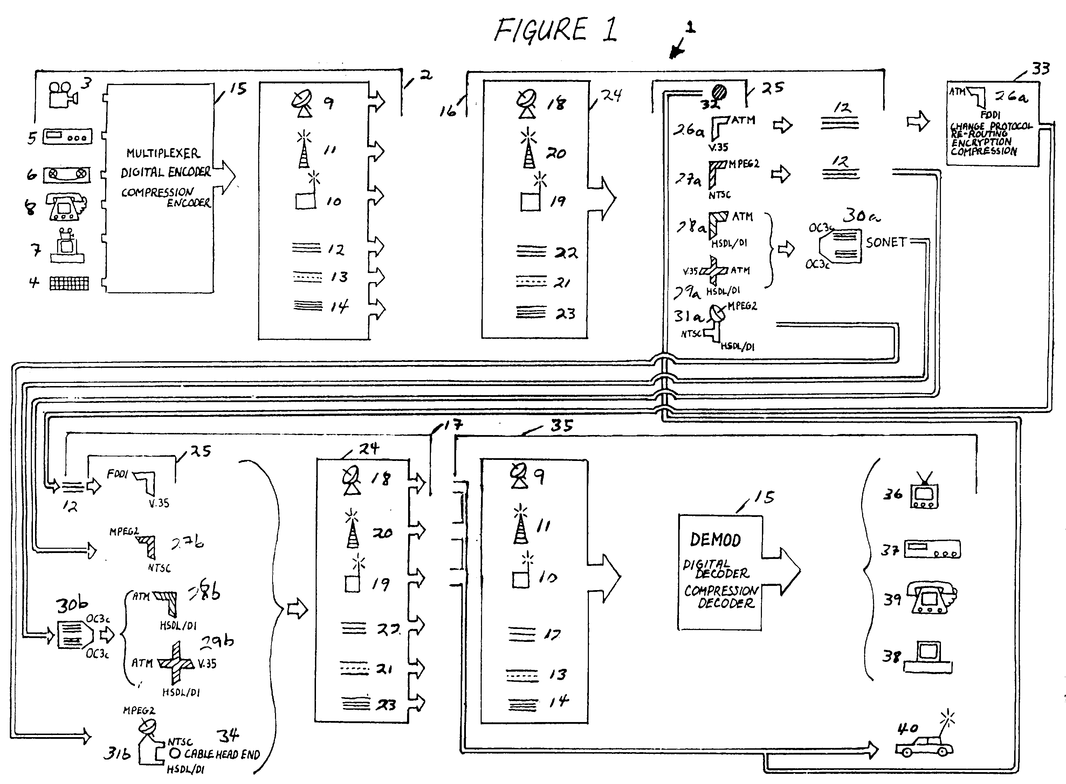

Figure 1 illustrates example components of a telecommunication system 1 that could be used to transmit a video mail message from sender to receiver. The video mail signal initiated at the premises of the sender-subscriber 2 might be done by such equipment as a video camera 3, image digitizer or scanner 4, VCR 5, video network server 6 or video computer system 7, video telephone 8, using a satellite uplink 9, digital or analog wireless modem 10 or RF signal transmitter 11, optical fibre interface 12, bidirectionally amplified coaxial cable interface 13, or an interface to a D1 or T1 line 14 provided by a telephone company with sufficient bandwidth to transmit video of a sender-accepted picture information quality. The sender-subscriber's and receiver's equipment might also include an integrated multiplexer/ demultiplexer, modulator/ demodulator, digital encoder/decoder and/or compression encoder/decoder system 15.

Each network provider office, one 16 local to the sender, another 17 local to the receiver, has an analog or digital interface for either satellite 18, wireless modem 19 or RF receiver 20, coaxial 21, optical fibre 22, or D1 telephone line transmission 23. The local sender or receiver POP video signal transmission interface 24 is directly connected to a video mail gateway 25 linking into the network provider's offering of transmission paths.

The video gateway 25 is directly controlled by an operator of the managing network provider local office POP 16. The gate 25 could simply be a digital switch or router with an analog video signal interface, like a Cisco AGS+ Router 26a with an analog video V.35 interface and ATM or FDDI output, a Scientific-Atlanta MPEG2 Router using an LSI Logic L64700 CCITT Encoder 27a to take NTSC analog signal input to discrete, highly compressed MPEG2 packet output. A combination of ATM virtual channeling and SONET aggregation could be done by using an AT&T AAN-2000 High Speed Service Multiplexer 28a, or an 8x8 switch fabric, Newbridge 36150 MainStreet ATMnet switch 29a, to route ATM formatted video transmissions at Constant Bit Rate (CBR) to an AT&T InterSpan's GCNS-2000 ATM System's OC3c SONET 30a channel between two major urban centers. The gateway 25 could also be represented by a General Instrument DigiCipher II 31a system to input either digital video or analog NTSC signals, multiplex and compress them as MPEG2 bitstreams, uplink them to a satellite transponder for a multiple receiver broadcast, which is then downlinked to a DigiCipher Integrated Receiver/Decoder (IRD) 31b in a cable head end to convert back to NSTC. Finally, if the receiver were local, the gateway 25 could be a CellularVision 28-Ghz wireless transmitter 32.

Local POP video gateway switches can provide encryption, as in the case of the DigiCipher system 31a, or encryption may have to be done by routing the transmission to an interpath POP 33 PSTN Central Office that has suitable device technology. Varying picture quality, or varying bandwidth transmission, can be provided to senders like hospitals or computer graphic production studios that have special scalable bandwidth facilities themselves, like High Speed Digital Subscriber Lines (HSDLs) 15, to the network POP, or a digital video server 6 that allows transmissions at different rates.

Typical interexchange path controls would be provided at an interpath POP 33 by the PSTN. These include dedicated or switched channels using protocols such as ATM, optical fibre FDDI, SONET and Internet IP. Hence, before the interchange transmission occurs, a control point broadband switch or router with such protocol interfaces would translate the message into one of these formats. As PSTN ATM and SONET services become more disseminated, these would be the desirable formats because of the windowing advantages bandwidth "throttling", or protocol controlled scalability and virtual channeling, and the fixed length cell based digital packets necessary for the timing of continuous video messaging. Alternatively, interexchange paths may simply favour high compression MPEG2 signal routing because of the high protocol overheads associated with ATM format. This approach is more convenient to implement in satellite communication because the entire interexchange control or even direct communication to the receivers, if they are equipped with MPEG2 decoders, can be handled by a single digital satellite uplink

At the network provider's receiver end POP 17, video gateway counterparts 26b, 27b, 28b, 29b, 30b, 31b to the entry video gateway or an interpath POP 33, receive the incoming transmission and convert it to a suitable delivery format. The local video gateway may have to convert the signal to analog and multiplex the signal at the cable head end of a local cable network for broadcast 34, or scale signal bandwidth using multiplexers to provide different transmission windows on a frequency multiplex basis to best suit equipment at the receiver's premises 35. The receiver then receives the transmission on a cable information channel 36, VCR 37, computer video system 38, video telephone system 39 or wireless modem, RF receiver or satellite downlink for a receiver in transit 40.

The network architecture for the example telecommunications system 1 can either be provided through a private network control system, which acts as the network manager of existing PSTN, satellite or cable network facilities, or it can be provided directly by a PSTN to the sender, where the PSTN acts as a managing network of other agent networks, if necessary, in order to provide a physical telecommunication link between a sender and a receiver.

The physical components of such a telecommunications system, including all controlling systems, which can convert a video signal from analog to digital, compress or modulate that signal using a variety of methods, encrypt the signal, uplink the signal to satellite, transmit the signal on a wireless local link, assess the traffic congestion along a given transmission path, and thereby allocate bandwidth through scheduling, all exist in today's PSTN telecommunication systems. However, these capabilities are not grouped together as controls of a common network, and a service is not offered to consumer or corporate clients, by either PSTNs or private networks as a per transmission based, video transmission delivery service.

By controlling all transmission time and routing options for each sender's transmission in the example telecommunications system 1, a managing network provider can group transmission control components represented in Figure 1 together for each transmission path as per-transmission-flexible control parameters. Each transmission path containing these variable control parameters, defined by a managing network provider on a per transmission basis for each sender/receiver path, will be termed a virtual transmission path for the purposes of this description.

The managing network provider's virtual transmission path controls can include such capabilities as variable bandwidth allocation, variable time and band of analog RF or digital wireless transmission, strategic multiplexing, variable signal compression and modulation, and variable strategic routing and protocol format interchangeability. A selective use of satellite or wireless transmission for certain sender-receiver transmission paths can also have a strategic significance, depending on either the sender or the receiver's point of presence. If one of the parties is in transit, at least one leg of the virtual transmission path, if not the entire path, would have to be wireless. Depending on sender or receiver's transmission or reception equipment, this leg can be expressed as an analog transmission on a dedicated RF band, licensed by the managing network provider. Multiple transmissions can be scheduled sequentially on a single RF band to avoid interference.

Since transmission times and virtual transmission paths are sender-independent for all transmissions, the managing network provider has an opportunity to preempt any traffic congestion scenarios caused by multiple simultaneous or time-overlapping transmissions of continuous video mail messages along common virtual transmission paths.

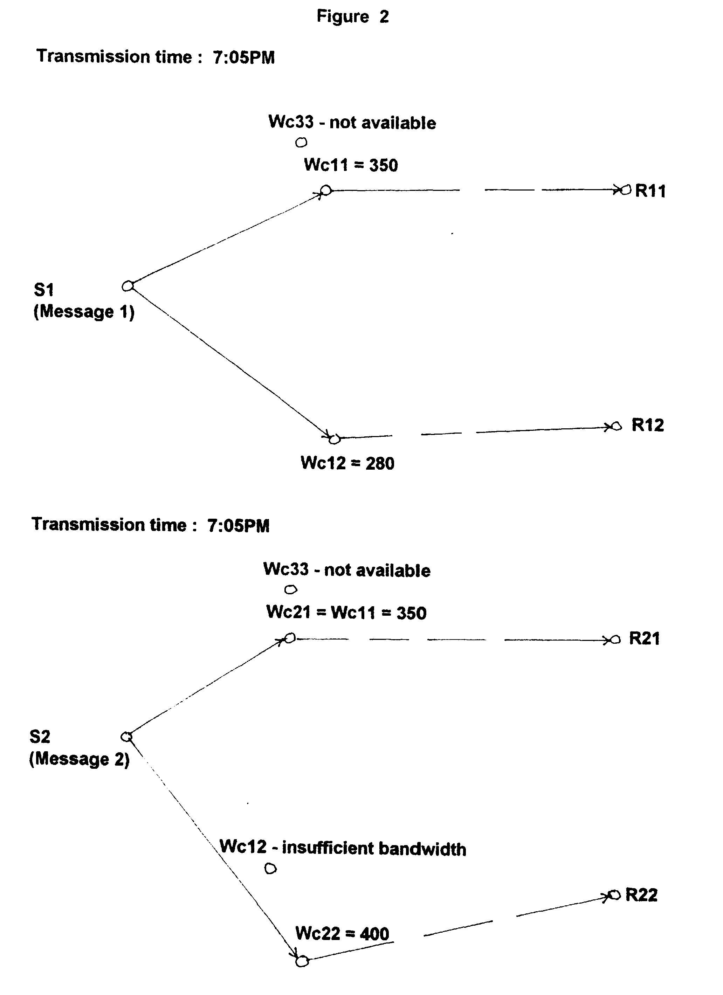

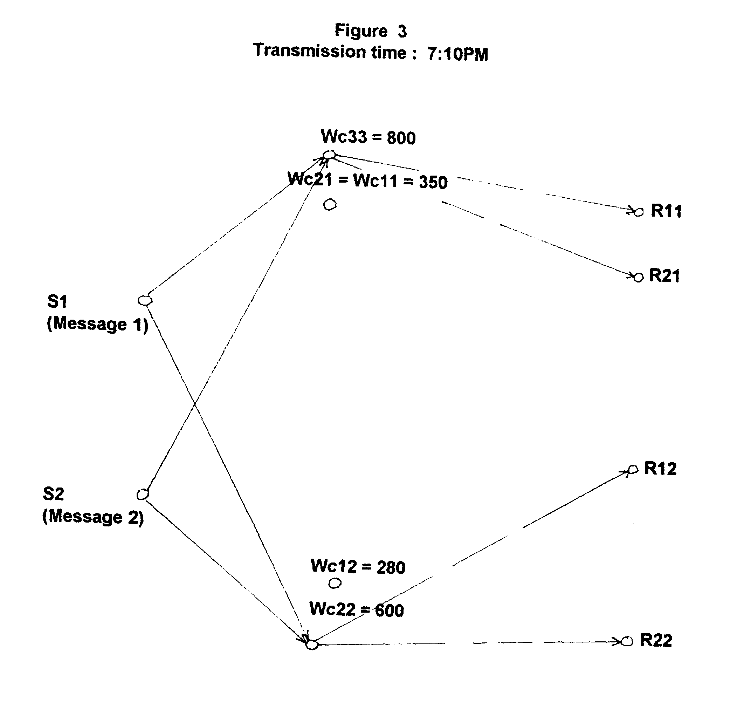

Figure 2 shows the bandwidth and routing requirements of two different transmissions having some common traffic control points. Figure 3 illustrates a simultaneous transmission of the two transmissions of Figure 2, using a per transmission based preemptive traffic control due to the managing network's assessment of an optimal transmission time and transmission paths.

Message 1 from sender S1 to receivers R11 and R12, is 3 minutes in duration, requiring a minimum picture information quality of 1.5 MB/sec., compressed rate. Message 2 from sender S2 to receivers, R21 and R22, is 5 minutes in duration, requiring a minimum picture information quality of 1.0 MB/sec., compressed rate. The minimum bandwidth window (W) for Message 1 is therefore 1.5 x 60 x 3 = 270 MB, and 300 MB for Message 2.

In Figures 2 and 3, window bandwidth, W, at example control points, c11, c12, c21..., are shown at two transmission times, 7:05PM and 7:10PM. Hence, at 7:05PM and 7:10PM, Wc11 and Wc21 = 350 MB; at 7:05PM Wc22 = 400 MB and Wc33 is not available, at 7:10PM Wc33 = 800 MB, Wc11 and Wc21 = 350 MB, Wc22 = 600 MB, Wc12 = 280 MB.

Any congestion problem arising from a simultaneous transmission of the two transmissions in Figure 2 is overcome by scheduling both transmissions at 7:10PM, when it is possible to use an alternative traffic routing for two of the transmission paths through another control point, c33. An additional benefit in network bandwidth is realized by economically routing the two other transmission paths through Wc22 = 600 MB at 7:10PM, thus freeing up bandwidth windows at Wc12 and Wc21.

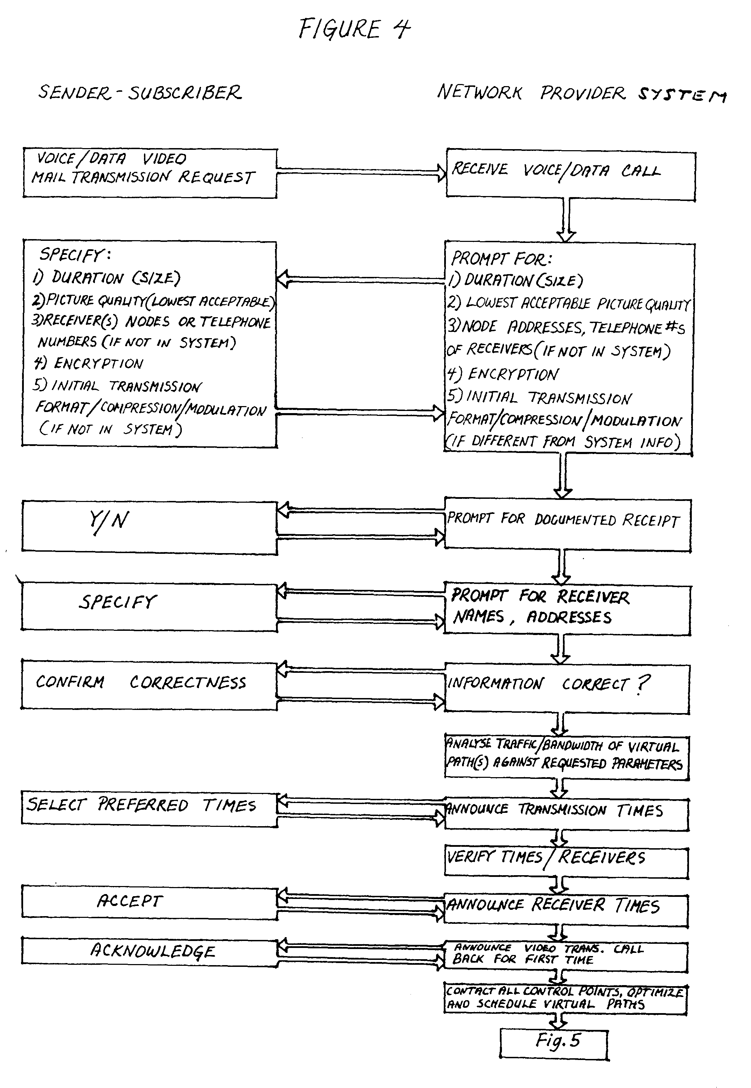

This traffic efficiency, through the preemptive 7:10PM rescheduling and rerouting of Figure 4, is not possible if network traffic is instigated at the senders' discretion. When senders determine the traffic picture, network controls based on network averaging or first-in-first-out (FIFO) buffering strategies accommodate new traffic flow. Hence, the network system would interrupt a second sender transmission on a common transmission path with a busy signal until the first transmission were through, but by the time the second sender attempted a transmission, there might be another interruption by a third sender's transmission along the same path.

Such network controls can deal with the problem of traffic congestion, but since they must respond, on-demand, to sender transmissions, they sometimes enforce traffic control at the expense of bandwidth efficiency. Such controls certainly do not provide predictive, efficient network usage on a per transmission basis, since transmission time, route and the amount of data of individual transmissions are not known to the network system until a sender tries to transmit. The routing and bandwidth inefficiencies of on-demand network traffic management are especially pronounced for the bulk data transmission of digital video, which require large amounts of bandwidth, fixed length packets or cells and constant, committed channel bit rates for the duration of each transmission.

The Figure 4 drawing illustrates the steps of sender/managing network provider interaction that allows for preemptive traffic control. This interaction is initiated by the sender-subscriber through a telephone, video telephone or computer e-mail in a call to the video mail delivery system's business office or POP 16. The number called could have a dedicated telephone prefix, like an 800 number, in which case, the office may not be local and may be some central office of the managing network provider. At the business office, the sender-subscriber either speaks to an operator or is connected to a computerized voice/data interactive system (PBX), or in the case of e-mail, a data interactive system, to allow both voice and data replies to the prompts of the interactive system. The operator or interactive system has direct access to the managing network's traffic management database, which stores information on previously scheduled traffic, qualified by network information from the managing network provider's network control system. The network provider's control system consists of automatic and network-operator assisted bandwidth and message format controls along specified transmission paths. Together, the network control and traffic information determine optimal periods of future bandwidth availability for new virtual transmission path scheduling. These periods can be depicted as transmission time options by the operator to the sender-subscriber.

Through the steps of the interactive process described by Figure 4, the sender-subscriber specifies the receivers and transmission duration or size, input rate, format and/or compression if this is not already included in the client database of the network provider, desired encryption, and lowest acceptable picture quality, or required picture quality/format if the sender's transmission equipment permits high resolution or differentiated data transmission rates or formats. The office operator or system may then prompt for any reporting requirements to the sender-subscriber on the actual receipt of the video mail by the receiver or receivers. If requested, the office system can provide a documented notice of video mail receipt for legal or other business purposes, and would prompt the sender for such information as the telephone number and address, as well as names, to obtain this confirmation by mail or e-mail from the receivers.

Given these sender-subscriber inputs and the existing knowledge of previously scheduled traffic, the office operator then proposes a number of alternative times for the actual transmission, given the understanding that the transmission time is also contingent on the availability of all receivers.

Receiver availability for the specified times is then verified by a network operator. This verification can be done during this initial interaction and may assume the form of a telephone call. Operator receiver verification, may not be possible or necessary, as in the case of a video mail transmission distributed through a satellite broadcast. If receiver acknowledgement is not possible during this interaction, the sender-subscriber would have to be notified at a later time by the system, as to the most suitable transmission time for receivers. If receiver availability cannot be confirmed, the office may request the sender-subscriber to stipulate another transmission time option to handle the transmission request, and the receiver verification steps would have to be repeated. Once all receivers and the sender agree on a common transmission time, this information, along with all other sender inputs, input to the managing network provider's traffic management database by the office operator or interactive system.

Prior to the actual sender-scheduled transmission linkup, all virtual transmission path controls are properly set by the managing network provider to ensure the transmission requirements. These determinations and virtual transmission path setups for all controls are pre-scheduled by the managing network provider operator. The managing network provider, being in control of the transmission time and the network traffic, is capable of requesting and scheduling bandwidth and protocol translation processing at virtual path control points from all involved network or transmission agents per video mail transmission, per receiver path for the period of each transmission.

Hence, the managing network provider can combine, at different points of the transmission path, a variety of agent networks - for example, local and interurban interexchanges, fibre optic and coaxial, satellite, analog RF and digital wireless transmission infrastructure; to translate the message into a variety of digital protocol formats (eg. ATM, FDDI, IP, SMDS, ISDN, SONET, Fast Packet); to encrypt, compress and decompress, or modulate and demodulate the message, (eg. using MPEG compression standards, Motion Compensation Prediction or Motion Compensation Interpolation, or other proprietary techniques, or digital modulation techniques, such as Quadrature Amplitude Modulation or Vestigial Side Band); and to convert from analog to digital and digital to analog formats, depending on the switch, transmitter and line hardware along the transmission path, in order to set up a viable virtual path for the video mail transmission.

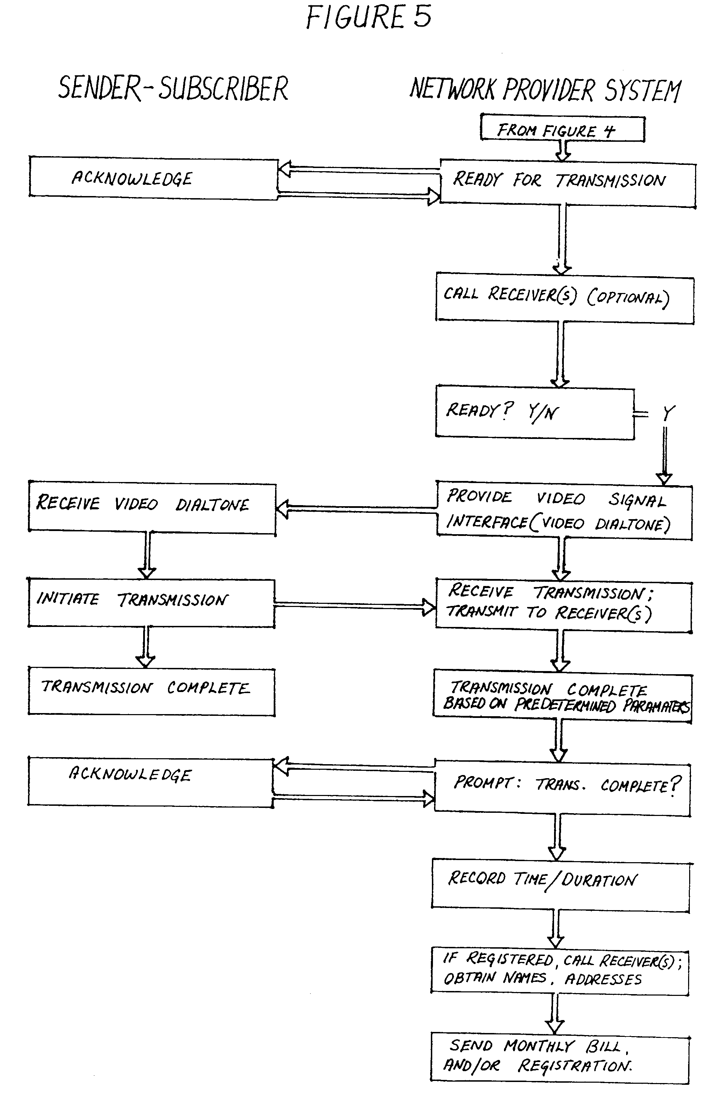

Referring now to Figure 5, the sender-subscriber is contacted by the network system office to initiate the actual video mail transmission. Before this contact is made, the system office would have already set or scheduled the setup of all parameters along the virtual transmission paths necessary for the video mail transmission. It is also assumed that all recipient parties would also have been notified of the expected transmission time. Subsequently, the sender receives video dialtone or a connect video signal, and initiates the transmission. Once the transmission is completed, a voice or e-mail message from the business office might inform the sender of a recorded time of each receiver's reception, and documented confirmation of reception, if requested, can be mailed to the sender along with a monthly bill.

Figure 4 and Figure 5 and the foregoing descriptions of these two illustrations, represent the sender/system interaction of the method without showing various checks which could be used to confirm or correct each step. For example, sender-subscriber's telephone number could be cross-referenced on the database of the office system, as well as the number, address and video mail reception capabilities of the intended recipients. If the recipients weren't subscribers themselves, their technical reception capabilities would also have to be obtained through a network operator contact before being input into the traffic management database to determine the viability of network connectivity.

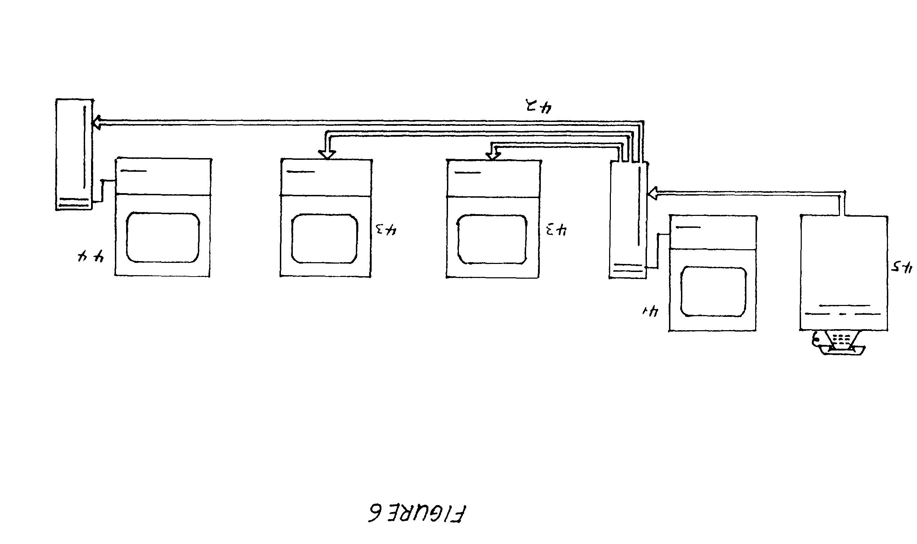

An operator independent determination of the virtual transmission path can be done by a video mailbox system shown in Figure 6. Video mailbox systems can automate virtual transmission path creation and provide video mail traffic scheduling control. In order to do this, each video mailbox system involves a computer system 41, connected to a narrowband network 42 for data communication updates to regional or local transmission control point operator computers 43 or actual device controllers along a video mail transmission path, and additional narrowband data communication updates to the traffic databases of other video mailbox systems 44 relevant to the administration of newly scheduled virtual transmission paths. A local video mailbox could also be narrowband networked to the voice/data PBX computer, or e-mail sender interactive office system (office operator's computer) 45, which functions according to the steps described in Figures 4 and 5. Sender specified data inputs transmitted directly to the local video mailbox, could then be directly input to the video mailbox database to determine transmission path scheduling and setups.

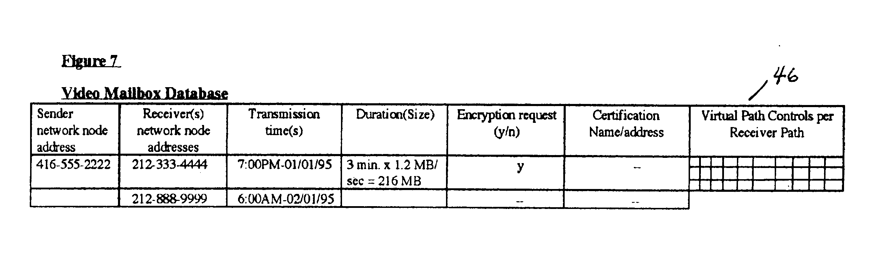

As shown by the example in Figure 7, each video mailbox traffic database references network node addresses such as videophone numbers, telephone numbers or transmission frequencies for each sender-subscriber. Similar addresses for non-subscriber recipients would be input to the video mailbox for each video mail message, along with other per transmission inputs, such as transmission duration, input picture quality/format, requested encryption and the names and addresses of receivers for a documented reporting of video mail receipt.

The video mailbox then references database information on already scheduled traffic over the next, for example 48 hours, to determine a transmission period for the duration and picture information quality of the transmission. The video mailbox system, then calculates the transmission times based on data it already has about potential receiver path control points and bandwidth usage in its traffic database.

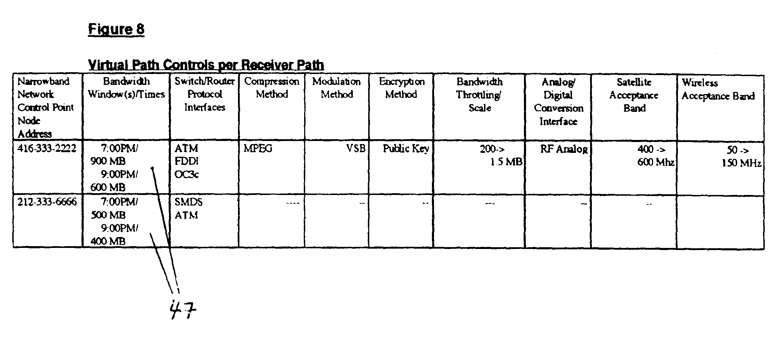

Additional example traffic database information, referred to as virtual path controls per receiver path 46 in Figure 7 and shown as Figure 8, includes information on all available routing and bandwidth control points for a given receiver transmission path. This information allows the video mailbox system to define the routing options of the virtual path, with the available bandwidth window defined at each control point at system selected times 47. The video mailbox database also includes each control point network address 48, and can also include other control point information available for transmission control, such as switch/router protocol translators, compression/decompression and modulation/demodulation processors, agent network bridges, encryption processors, bandwidth scaling processors, analog to digital conversion processors, available satellite uplink/downlink bands and available wireless transmitter/receiver bands.

The video mailbox determines the virtual transmission path from its database of switch, router or transmitter data, and data on compression capabilities at control points along each receiver path. Efficiencies are obtained by reducing the number of agent networks or actual transmission connections, such as switches, routers, uplinks/downlinks and wireless transmitters, along a potential virtual transmission path. All efficiency criteria would be contingent on the physical switch, router and transmitter infrastructure along a required transmission path. Controls offering compression or modulation capabilities and conversion to the most ubiquitous routing protocol would then be key priorities.

Once all optimizations are met, the virtual transmission path is defined in terms of optional times. Choosing the actual transmission time option would then follow through a common agreement by the sender, receivers and all necessary transmission path control point operators, with this time option and all other virtual path parameters then stored in the video mail database to reserve network capabilities for the actual transmission.

The method is preferably initiated by each sender calling the office of the managing network provider and specifying the telephone number or network node address of each receiver of the intended video mail transmission and the duration or size of the intended transmission.
Preferably, each sender also specifies the minimum picture quality and desired encryption of the intended transmission, and whether the receipt of the transmission should be registered or reported by each recipient. The managing network provider then checks existing and scheduled video mail traffic between each sender and each identified recipient to determine appropriate transmission times, taking into account all possible bandwidths and transmission controls known to the network that can provide a transmission capability to fully transmit the video mail transmission and also optimise available network bandwidth and transmission capabilities for other potential video mail traffic.

The managing network provider then informs all potential agent networks and all transmission control points along the transmission paths between sender and each identified receiver of the agreed time and of the data communication requirements of the intended video mail transmission.

Hence it sets all control points, either through its own operators or the operators of agent networks, and informs all such agents of the pending transmission immediately before calling each sender and instructing each sender to initiate its transmission. At the designated transmission time each sender initiates the video mail transmission and the managing network then transmits the video mail to each receiver designated by each sender. If requested to do so by the sender, the managing network also obtains documented confirmation of receipt of the entire video mail transmission from each receiver designated by each sender.

Delivery of video mail can be reported with certainty and guaranteed to each sender or subscriber, and all receivers, being either end receivers or multimedia merging processors, of the video mail. As the delivery of the video mail is controlled and transmitted on a per transmission basis, notification of all other agent network providers or transmission entities both locally, and at all effective control points along the virtual transmission path, of the exact time and period of each anticipated video mail transmission is possible. Thus an adequate bandwidth window for each video mail transmission along each time determined virtual transmission path can be guaranteed. This allows the transmission of live video signals on a per transmission basis from each and every sender to each and every receiver.

The method of the present invention is preferably operated on a telecommunication system involving one or several public or private switch telephone, networks, computer networks, cable networks, satellite or wireless agent networks or transmissions enabling entities. Such a telecommunication system comprises one or several managing network providers or agent network provider offices or points of presence of the managing network provider. These receive digital or analog video signals from local sender-subscribers as well as orders regarding the delivery of video mail and any requests for notification of successful delivery from sender-subscribers.

The system also comprises one or several offices local to receivers for routing the video mail to receivers locally. The receiving local offices include a video mail gateway, which is potentially the first control point of any virtual transmission path to each and every receiver. The virtual transmission path for any video mail transmission is controlled by the managing network provider's, operators or transmission control system, and is controlled specifically for each video mail transmission. The operators or transmission control system of the managing network provider also provide, on occasion, similar virtual path controls, such as RF band or acceptance bandwidth, over video mail received from each sender-subscriber at the local office video mail transmission interface to the video mail gateway.

The telecommunication system also includes an office interface for each sender-subscriber or video mail receiver, including an operator, or voice, data or voice and data interactive system to obtain necessary information about each sender-subscribers video information, and then to inform each sender-subscriber as to when the transmission will take place.

The system also includes another interface to handle the reception of each sender-subscriber's video mail in one or more of the following transmission forms: satellite downlink; digital wireless or analog RF wireless or coaxial transmission; digital optical fibre, digital coaxial or digital telephone line transmission; or a similar operator or interactive interface. One or more of said video mail interface capabilities are also included at an office local to each identified receiver.

Each sender-subscriber premises includes means of transmitting the video mail to the local office, which may include a video camera, image digitiser or scanner, television, VCR, video network server or video computer system, video telephone, satellite uplink, digital wireless modem or RF signal analog transmitter, transmission interface multiplexer or digital encoder for an optical fibre or coaxial cable link to the nearest local office, or a line provided by a telephone company with sufficient bandwidth to transmit video of an accepted picture information quality for each sender-subscriber. The means of transmission can also include digital compression or modulation capabilities at each sender-subscriber' 5 premises.

Each receiver premises includes means of receiving the video mail, which may include a video telephone, television, VCR, video network server or video computer system, satellite downlink digital wireless modem or RF analog signal transmitter, transmission interface multiplexer or digital encoder for an optical fibre or coaxial cable link to the nearest local office, or a line provided by a telephone company with sufficient bandwidth to receive video of the originally transmitted picture information quality or an accepted picture information quality determined by the bandwidth between a receiver and a local office. The means of receiving video mail may also include digital decompression or demodulation capabilities at the receiver's premises.

The method of the present invention allows the managing network provider to, with liberty, through its own telecommunication system, or through the telecommunication systems of agent networks, on a per transmission basis, at any control point along any virtual transmission path, do the following: convert the video mail transmission from analog to digital format; compress and decompress the message using digital methods of video and audio compression; or use any digital modulation technique to squeeze more bandwidth onto a single RF carrier; encrypt the message; convert the video mail transmission at any point from 1 to any other digital communication protocol; determine the period of usage and frequency of the band for digital wireless or analog or RF transmission; or determine the period of transponder access on a satellite to enable a satellite uplink for the transmission; or provide these latter two capabilities to each sender-subscriber directly for the local leg of the video mail transmission from each sender-subscriber to a local office before the first control point, as well as at any control point along the virtual transmission path thereafter.

The method of the present invention may also be implemented using a single or network of video mailbox systems, each consisting of a computer or microprocessor, and a computer memory capability to store database information which may be used by the managing network provider to schedule, at any control point along the virtual transmission path, the necessary bandwidth, protocol format and routing of every video mail transmission on a per transmission basis.

The video mailbox database stores for each transmission: each sender's and all recipient's video mail transmission telephone or network node addresses; transmission times; duration; input picture information quality or format; requested message encryption; identified receiver's names and addresses for documented receipts; and such control point information per transmission path from each sender to each identified receiver, as is available. The control point information can include details of switch/router protocol translation processors, compression/decompression and modulation/demodulation processors, agent network bridges, encryption processors, bandwidth scaling processors, analog to digital conversion interfaces, satellite transmission interfaces and wireless transmission interfaces, and any other network control information pertaining to the routing and scheduling of an adequate transmission path, based on an assessment of adequate bandwidth window provided by all necessary control points between each sender and each identified receiver.

The foregoing is intended, along with the drawings, to illustrate the preferred embodiment of the invention. Those skilled in the art will be able to devise numerous arrangements which, although not explicitly shown or described herein, embody the invention as claimed in the appended claims.

## Claims

1. A method for scheduling sender requested video transmissions from a variable number of senders to at least one receiver under the control of a managing network provider, the method comprising the steps of:
(a) each sender transmitting data, identifying the intended receiver(s) and the duration or size of an intended video transmission, to the managing network provider;
(b) providing the managing network provider with control information concerning existing and scheduled video transmission traffic over one or more virtual transmission path(s) between each sender and each of its identified receiver(s) at control points along each virtual transmission path;
(c) for each transmission to each identified receiver, the managing network provider preemptively scheduling, in response to the control information to optimise the network bandwidth and transmission capabilities for all the requested and scheduled transmissions it is handling, a transmission path via a plurality of control points and, for each control point, the transmission time, transmission period, protocol format and transmission speed.
(d) sending a scheduled transmission time from the managing network provider to each sender;
(e) the managing network provider setting up one or more control points along the scheduled transmission path to each identified receiver for the scheduled transmission time; and
(f) each sender transmitting the video data at the scheduled time through the scheduled transmission path to each identified receiver.

2. A method according to claim 1 in which the managing network provider also preemptively schedules, on a per transmission basis, all or a subset of the following:
(i) encryption;
(ii) compression;
(iii) signal modulation;
(iv) multiplexing;
(v) use of transmission devices and routers;
(vi) RF frequency band; or
(vii) scale or size of virtual channel for the transmission;
in response to the control information.

3. A method according to any preceding claim in which the control information includes the data communication requirements of each requested and scheduled transmission.

4. A method according to claim 3 in which in step (e) the managing network provider informs all the control points along the scheduled transmission path(s) between each sender and each identified receiver of the scheduled time and the data communication requirements of the intended transmission.

5. A method according to any preceding claim in which a sender requests confirmation that the video transmission has been received by the intended receiver(s).

6. A method according to any preceding claim in which before step (d) the managing network provider sends several optional transmission times to each sender, and each sender then selects one of these and identifies this selected time to the managing network provider which then schedules the transmission at the selected time.

7. A method according to any preceding claim in which the managing network provider may, at any control point along any scheduled virtual transmission path also do all or a subset of the following options:
(i) convert the video transmission from analog to digital formats;
(ii) compress and decompress the video transmission using digital methods of video and audio compression;
(iii) use any digital modulation techniques to squeeze more bandwidth onto a single RF carrier;
(iv) encrypt the video transmission;
(v) convert the transmission at any point from one to any other digital communication;
(vi) determine the period of usage and frequency of the transmission band for digital wireless or analog RF transmission;
(vii) multiplex;
(viii) determine the period of transponder access on a satellite to enable a satellite uplink for the transmission at any control point along a virtual transmission path; and
(ix) determine the period of usage and frequency of the band for satellite, digital wireless or analog RF transmission to each receiver from each sender to a first control point.

8. A method according to any preceding claim in which the control information is stored in a database and, for each transmission to each identified receiver, after step (c) the scheduled transmission path, and the transmission time, protocol format and transmission speed for each control point are input to the database.

9. A method according to any preceding claim in which the managing network provider uses one or more video mailbox systems to schedule transmissions, each mailbox system including a database which provides the managing network provider with control information, the database containing data specifying all or a subset of the following: addresses; transmission times; transmission durations; input picture information quality; transmission format; requested message encryption; identified receivers' names and addresses for documented receipt; control point information per transmission path from each sender to each identified receiver.

10. A method according to claim 8 or 9 in which: said control point information includes data specifying all or any subset of the following:
i) switch/router protocol translation processors;
ii) compression/decompression processors;
iii) modulation/demodulation processors;
iv) agent network bridges;
v) encryption processors;
vi) bandwidth scaling processors;
vii) analog to digital conversion interfaces;
viii) satellite transmission interfaces;
ix) wireless transmission interfaces;
x) network bandwidth optimizations based on scalable bandwidth controls.

11. The method of any preceding claim wherein the video transmission is made without any requirement of storage of the video transmission by a sender or network provider.

12. A method according to any preceding claim further comprising the steps of compressing or modulating the intended video transmission before transmission, and then decompressing or demodulating the transmission at the receiver.

## Patentansprüche

1. Ein Verfahren zur Planung senderangeforderter Video-Übertragungen von einer variablen Anzahl Sender an mindestens einen Empfänger unter der Kontrolle eines führenden Netzanbieters, das folgende Schritte aufweist:
(a) jeder Sender, der Daten überträgt, identifiziert dem führenden Netzanbieter den (die) vorgesehenen Empfänger, sowie die Dauer oder Größe einer vorgesehenen Videoübertragung;
(b) Versorgung des führenden Netzanbieters mit Kontrollinformationen über den laufenden und den geplanten Videoübertragungsverkehr über einen oder mehrere virtuelle Übertragungswege zwischen jedem Sender und jedem seiner identifizierten Empfänger an Kontrollpunkten entlang jedem virtuellen Übertragungsweg;
(c) in Reaktion auf die Kontrollinformation nimmt der führende Netzanbieter zur Optimierung der Netzbandbreite und Übertragungsmöglichkeiten für alle angeforderten und geplanten, von ihm besorgten Übertragungen eine preemptive Planung eines Übertragungsweges über eine Mehrzahl von Kontrollpunkten, sowie der Übertragungszeit, des Übertragungszeitraums, des Protokollformats und der Übertragungsgeschwindigkeit eines jeden Kontrollpunkts vor.
(d) Sendung einer geplante Übertragungszeit vom führenden Netzanbieter an jeden Sender;
(e) der führende Netzanbieter richtet einen oder mehrere Kontrollpunkte entlang dem geplanten Übertragungsweg an jeden identifizierten Empfänger für die geplante Übertragungszeit ein; und
(f) zur geplanten Zeit werden die Videodaten von jedem Sender über den geplanten Übertragungsweg an jeden identifizierten Empfänger übertragen.

2. Ein Verfahren nach Anspruch 1, bei welchem der führende Netzanbieter pro Übertragung von Fall zu Fall ferner eine preemptive Planung der gesamten folgenden Angaben oder eines Teilsatzes derselben vornimmt:
(i) Verschlüsselung;
(ii) Kompression;
(iii) Signalmodulation;
(iv) Multiplexbetrieb;
(v) Einsatz von Übertragungsvorrichtungen und Routern;
(vi) HF-Band; oder
(vii) Maßstab oder Größe des virtuellen Kanals für die Übertragung;
in Reaktion auf die Kontrollinformation.

3. Ein Verfahren nach vorangehenden Ansprüchen, bei dem die Kontrollinformation die Datenkommunikationsanforderungen einer jeden angeforderten und geplanten Übertragung beinhaltet.

4. Ein Verfahren nach Anspruch 3, bei dem der führende Netzanbieter als Schritt (e) alle Kontrollpunkte entlang dem (den) geplanten Übertragungsweg(en) zwischen jedem Sender und jedem identifizierten Empfänger über die geplante Zeit und die Datenkommunikationsanforderungen der vorgesehenen Übertragung informiert.

5. Ein Verfahren nach vorangehenden Ansprüchen, bei dem ein Sender die Bestätigung anfordert, daß die Videoübertragung von dem (den) vorgesehenen Empfänger(n) empfangen worden ist.

6. Ein Verfahren nach vorangehenden Ansprüchen, bei dem der führende Netzanbieter vor Schritt (d) jedem Sender mehrere wahlweise Übertragungszeiten sendet und jeder Sender dann eine dieser Zeiten auswählt und diese ausgewählte Zeit dem führenden Netzanbieter bekanntgibt, der die Übertragung daraufhin zur ausgewählten Zeit einplant.

7. Ein Verfahren nach vorangehenden Ansprüchen, bei dem der führende Netzanbieter an jeglichem Kontrollpunkt entlang jedwedem geplanten, virtuellen Übertragungsweg ferner über die gesamten folgenden Optionen oder einen Teilsatz derselben verfügt:
(i) Umwandlung der Videoübertragung von Analog- in Digitalform;
(ii) Kompression und Dekompression der Videoübertragung anhand von digitalen Video- und Audiokompressionsverfahren;
(iii) das Einzwängen von zusätzlicher Bandbreite auf einem einzigen HF-Träger anhand jeglicher digitaler Modulationsverfahren;
(iv) Verschlüsselung der Videoübertragung;
(v) die Umsetzung von einer digitalen Kommunikation zu irgendeiner anderen an jeglichem Punkt;
(vi) Bestimmung des Auslastungszeitraums und der Frequenz des Übertragungsbands für drahtlose Digital- oder HF-Analogübertragungen;
(vii) Multiplex;
(viii) Bestimmung der Transponder-Zugriffszeit auf einem Satelliten, um an jedwedem Kontrollpunkt entlang einem virtuellen Übertragungsweg eine Satellitenaufwärtsstrecke für die Übertragung herstellen zu können; und
(ix) Bestimmung des Band-Auslastungszeitraums und der Bandfrequenz für die Satelliten-, drahtlose Digital- oder HF-Analogübertragung an jeden Empfänger von jedem Sender an einen ersten Kontrollpunkt.

8. Ein Verfahren nach vorangehenden Ansprüchen, bei dem die Kontrollinformation auf einer Datenbank gespeichert ist und für jede Übertragung an jeden identifizierten Empfänger nach Schritt (c) der geplante Übertragungsweg, sowie die Übertragungszeit, das Protokollformat und die Übertragungsgeschwindigkeit für jeden Kontrollpunkt in die Datenbank eingegeben werden.

9. Ein Verfahren nach vorangehenden Ansprüchen, bei dem der führende Netzanbieter zur Planung von Übertragungen ein oder mehrere Video-Mailbox-Systeme verwendet, wobei jedes Mailbox-System eine Datenbasis aufweist, die den führenden Netzanbieter mit Kontrollinformation versorgt und Daten enthält, die alles folgende oder einen Teilsatz davon bestimmen:
Adressen; Übertragungszeiten; Übertragungszeiträume; Qualität der eingegebenen Bildinformation; Übertragungsformat; angeforderte Meldungsverschlüsselung; Namen und Anschriften identifizierter Empfänger zwecks dokumentierter Quittung; Kontrollpunktinformation pro Übertragungsweg von jedem Sender an jeden identifizierten Empfänger.

10. Ein Verfahren nach Anspruch 8 oder 9, bei dem:
besagte Kontrollpunktinformation Daten umfaßt, die alles folgende oder einen Teilsatz davon bestimmen:
i) Schalt-/Router-Protokoll-Übersetzungsprozessoren;
ii) Kompressions-/Dekompressionsprozessoren;
iii) Modulations-/Demodulationsprozessoren;
iv) Agent-Netzbrücken;
v) Verschlüsselungsprozessoren;
vi) Bandbreite-Skalierungsprozessoren;
vii) Analog-Digital-Umsetzungsschnittstellen;
viii) Satelliten-Übertragungsschnittstellen;
ix) Schnittstellen für drahtlose Übertragung;
x) Optimierungen der Netzbandbreite aufgrund von skalierfähigen Steuerungen der Bandbreite.

11. Ein Verfahren nach vorangehenden Ansprüchen, bei dem die Videoübertragung vorgenommen wird, ohne diese durch einen Sender oder Netzanbieter speichern lassen zu müssen.

12. Ein Verfahren nach vorangehenden Ansprüchen, das ferner die Schritte aufweist, die vorgesehene Videoübertragung vor der Übertragung zu komprimieren oder zu modulieren und die Übertragung danach beim Empfänger zu entkomprimieren oder zu demodulieren.

## Revendications

1. Méthode de programmation de transmissions vidéo demandées par un expéditeur parmi un nombre variable d'expéditeurs à au moins un destinataire sous la commande d'un fournisseur-gérant de réseau, la méthode comprenant les étapes de :
(a) transmission par chaque expéditeur de données, identifiant le ou les destinataires prévus et la durée ou la taille d'une transmission vidéo prévue, au fournisseur-gérant de réseau ;
(b) fourniture au fournisseur-gérant de réseau d'informations de commande concernant le trafic des transmissions vidéo en cours et programmées sur un ou plusieurs chemins de transmission virtuels entre chaque expéditeur et chacun de ses destinataires identifiés au niveau de points de commande le long de chaque chemin de transmission virtuel ;
(c) programmation préemptive, pour chaque transmission à chaque destinataire identifié, par le fournisseur-gérant de réseau, en réponse aux informations de commande en vue d'optimiser les capacités de largeur de bande et de transmission du réseau pour toutes les transmissions demandées et programmées qu'il traite, d'un chemin de transmission par l'intermédiaire d'une pluralité de points de commande et, pour chaque point de commande de l'heure de transmission de la période de transmission, du format de protocole et de la vitesse de transmission.
(d) envoi d'une heure de transmission programmée par le fournisseur-gérant de réseau à chaque expéditeur ;
(e) établissement par le fournisseur-gérant de réseau d'un ou plusieurs points de commande le long du chemin de transmission programmé allant à chaque destinataire identifié pour l'heure de transmission programmée ; et
(f) transmission par chaque expéditeur des données vidéo à l'heure programmée sur le chemin de transmission programmé à chaque destinataire identifié.

2. Méthode selon la revendication 1, dans laquelle le fournisseur-gérant de réseau programme également préemptivement, pour chaque transmission, tout ou partie des aspects suivants :
(i) cryptage ;
(ii) compression ;
(iii) modulation des signaux ;
(iv) multiplexage ;
(v) utilisation de dispositifs de transmission et de routeurs ;
(vi) bande de fréquences RF ; ou
(vii) échelle ou taille du canal virtuel pour la transmission ;
en réponse aux informations de commande.

3. Méthode selon l'une quelconque des revendications précédentes, dans laquelle les informations de commande comportent les exigences de communication de données de chaque transmission demandée et programmée.

4. Méthode selon la revendication 3, dans laquelle à l'étape (e) le fournisseur-gérant de réseau informe tous les points de commande le long du ou des chemins de transmission programmés entre chaque expéditeur et chaque destinataire identifié de l'heure programmée et des exigences de communication de données de la transmission prévue.

5. Méthode selon l'une quelconque des revendications précédentes, dans laquelle un expéditeur demande confirmation que la transmission vidéo a été reçue par le ou les destinataires prévus.

6. Méthode selon l'une quelconque des revendications précédentes, dans laquelle avant l'étape (d) le fournisseur-gérant de réseau envoie plusieurs heures de transmission optionnelles à chaque expéditeur, et chaque expéditeur sélectionne ensuite l'une de celles-ci et identifie cette heure sélectionnée au fournisseur-gérant de réseau qui programme alors la transmission à l'heure sélectionnée.

7. Méthode selon l'une quelconque des revendications précédentes, dans laquelle le fournisseur-gérant de réseau peut, au niveau de n'importe quel point de commande le long de n'importe quel chemin de transmission virtuel, procéder à également tout ou partie des options suivantes :
(i) convertir la transmission vidéo d'un format analogique en un format numérique
(ii) comprimer et décomprimer la transmission vidéo en utilisant des méthodes numériques de compression audio et vidéo ;
(iii) utiliser n'importe quelles techniques numériques pour serrer davantage de largeur de bande sur une même porteuse RF ;
(iv) crypter la transmission vidéo ;
(v) convertir à tout moment la transmission d'une communication numérique en toute autre communication numérique ;
(vi) déterminer la période d'utilisation et la fréquence de la bande de transmission pour une transmission sans fil numérique ou RF analogique ;
(vii) multiplexer
(viii) déterminer la période d'accès de transpondeur sur un satellite pour permettre une liaison montante de satellite pour la transmission au niveau de n'importe quel point de commande le long d'un chemin de transmission virtuel ; et
(ix) déterminer la période d'utilisation et la fréquence de la bande de transmission par satellite, sans fil numérique ou RF analogique à chaque destinataire depuis chaque expéditeur vers un premier point de commande.

8. Méthode selon l'une quelconque des revendications précédentes, dans laquelle les informations de commande sont mémorisées dans une base de données et pour chaque transmission à chaque destinataire identifié après l'étape (c) le trajet de transmission programmé, et l'heure de transmission, le format de protocole et la vitesse de transmission pour chaque point de commande sont entrés dans la base de données.

9. Méthode selon l'une quelconque des revendications précédentes, dans laquelle le fournisseur-gérant de réseau utilise un ou plusieurs systèmes vidéo postaux pour programmer les transmissions, chaque système postal comportant une base de données qui fournit au fournisseur-gérant de réseau des informations de commande la base de données contenant des données spécifiant la totalité ou une partie des aspects suivants : adresses ; heures de transmission ; durées de transmission ; qualité des informations d'image d'entrée ; format de transmission ; cryptage demandé des messages ; noms et adresses des destinataires identifiés pour une réception documentée ; informations sur les points de commande pour chaque trajet de transmission depuis chaque expéditeur vers chaque destinataire identifié.

10. Méthode selon la revendication 8 ou 9, dans laquelle :
lesdites informations sur les points de commande comportent des données spécifiant tout ou partie des aspects suivants :
(i) processeurs de traduction de protocole de commutation/routage ;
(ii) processeurs de compression/décompression ;
(iii) processeurs de modulation/démodulation
(iv) ponts avec réseaux d'agents ;
(v) processeurs de cryptage ;
(vi) processeurs de mise à l'échelle de la largeur de bande
(vii) interfaces de conversion analogique/numérique ;
(viii) interfaces de transmission par satellite ;
(ix) interfaces de transmission sans fil ;
(x) optimisations de la largeur de bande du réseau en fonction des commandes de largeur de bande échelonnable.

11. Méthode selon l'une quelconque des revendications précédentes, dans laquelle la transmission vidéo est effectuée sans que l'expéditeur ou le fournisseur-gérant de réseau ait à mémoriser la transmission vidéo.

12. Méthode selon l'une quelconque des revendications précédentes, comprenant en outre les étapes de compression ou de modulation de la transmission vidéo prévue avant la transmission puis de décompression ou de démodulation de la transmission au niveau du destinataire.
